(19) Europäisches Patentamt

European Patent Office

Office européen des brevets

(11) **EP 1 071 034 A2**

(12) **EUROPÄISCHE PATENTANMELDUNG**

(43) Veröffentlichungstag:
24.01.2001 Patentblatt 2001/04

(51) Int. Cl.⁷: **G06K 9/00**, G06K 9/62

(21) Anmeldenummer: 00113705.8

(22) Anmeldetag: 28.06.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **28.06.1999 DE 19929670**

(71) Anmelder:
**SIEMENS AKTIENGESELLSCHAFT**
**80333 München (DE)**

(72) Erfinder:
• **Egger, Robert**
  **8605 Kapfenberg (AT)**

• **Haselsteiner, Ernst**
  **8010 Graz (AT)**
• **Heschgl, Kurt**
  **A-8043 Graz (AT)**
• **Windisch, Claudia**
  **8565 St. Johann O. H. (AT)**
• **Hribernig, Gerd**
  **8046 Graz (AT)**
• **Marius, Wolfgang**
  **8043 Graz/Kroisbach (AT)**
• **Raunegger, Arno**
  **8047 Graz (AT)**

(54) **Enrollment von Fingerprints**

(57) Ein Verfahren für das Enrollment von Fingerprints, bei welchem aus einer Menge von $n = N_{max}$ Fingerprints sämtliche Kombinationen von Fingerprints mit einer Anzahl z gebildet werden, wobei $z \leq N_{max}$ ist, innerhalb jeder Kombination für die darin bildbaren Paare von Fingerprints ein Match-Score-Wert m gebildet wird, alle Kombinationen, bei welchen der Match-Score-Wert aller Paare nicht zwischen einer vorgebbaren unteren und einer vorgebbaren oberen Grenze liegt, verworfen werden, für die verbleibenden Kombinationen eine Kostenfunktion als Linearkombination gewichteter Qualitätsbeiträge $C_i$ berechnet wird, und jene Fingerprints, welche die Kostenfunktion minimieren als Satz zur Referenzdarstellung herangezogen werden.

**EP 1 071 034 A2**

**Beschreibung**

Die Erfindung bezieht sich auf ein Verfahren für das Enrollment von Fingerprints, bei welchem für die Erstellung einer Referenz aus einer Menge von $N_{max}$ Fingerprints unter Beachtung von Qualitätskriterien ein Satz von k Fingerprints ausgewählt und zur Referenzdarstellung für eine spätere Identifikation eines Anfrage-Fingerprints herangezogen wird.

Neben der seit langer Zeit bestehenden Bedeutung der Fingerabdruckidentifizierung in der Kriminalistik erlangt die Identifikation von Fingerabdrücken auf maschineller Basis auch auf anderen Gebieten zunehmende Bedeutung, beispielsweise bei Kreditkarten- und Geldausgabeautomaten sowie bei der Zutrittskontrolle zu Gebäuden bzw. der Berechtigungskontrolle bei Computersystemen, Telekommunikationsgeräten, etc.

Im Gegensatz zur Erfassung und Überprüfung anderer personenbezogener Merkmale, wie z. B. der Struktur der Iris, der Länge und Form der Finger, der Stimme oder der Gesichtsmerkmale, bieten sich Fingerabdrücke als mit einfachen, rasch durchführbaren und für eine Person nicht unangenehmen Prozeduren erfaßbar an. Einen Überblick über personenbezogene Merkmale gibt der Artikel „It had to be you" in IEEE Spectrum, Februar 1994. Dazu kommt, daß Fingerabdrücke und ihre Strukturen bestens erforscht sind. Sorgfältige Reihenuntersuchungen und Statistiken haben nachgewiesen, daß die Fingerabdrücke jedes Menschen individuell und selbst bei eineiigen Zwillingen unterschiedlich, wenngleich ähnlich sind.

Das Muster der Fingerabdrücke wird von den Papillarlinien, auch „Ridges" genannt, erzeugt, wobei für die Identifizierung vor allem als Minutien bezeichnete Merkmale von Bedeutung sind, nämlich Endpunkte, Verzweigungen, Inseln sowie andere singuläre Merkmale. Grundbegriffe sind ebenso wie kriminalistische Methoden in dem Standardwerk „The Science of Fingerprints", United States Department of Justice, FBI, U. S. Government Printing Office, Rev. 12 - 84, Catalog No. JI. 14/2. F49/12/977, enthalten. Nähere Einzelheiten zur automatischen Klassifizierung von Fingerabdrücken sind beispielsweise zu finden in „PCASYS-A Pattern-Level Classification Automatic System for Fingerprints", G. T. Candela et al., U. S. Department of Commerce, August 1995.

Vor allem bei den „nicht kriminalistischen" Anwendungen steht zu Beginn das sogenannte „Enrollment", das ist die Registrierung oder die Neuaufnahme von Fingerprints in ein Archiv von Referenzbildern. Die Aufnahme erfolgt üblicherweise mit Hilfe von Printsensoren die z. B. auf optischer oder kapazitiver Basis arbeiten. Eine Aufnahme von schlechten Referenzbildern in das Archiv verschlechtert naturgemäß die spätere Leistungsfähigkeit des Fingerprintsystems und sollte daher vermieden werden. Dabei können unterschiedliche Ursachen zu minderer Qualität der Referenzbilder führen, z. B. feuchte Haut, unterschiedliche Aufnahmepositionen des Fingers, zu hoher oder zu niedriger Auflagedruck, Verschmierungen, etc. Üblicherweise wird die Neuaufnahme von Fingerprints durch eine Person überwacht und Fingerprints, die gewisse Minimalanforderungen an die Qualität nicht erfüllen, werden sofort ausgeschieden.

Eine Aufgabe der Erfindung liegt darin, möglichst gute Referenzfingerprints in ein Archiv aufzunehmen, um die Fehlerrate einer späteren Authentifikation bzw. Identifikation zu verringern.

Diese Aufgabe wird mit einem Verfahren der eingangs genannten Art gelöst, bei welchem erfindungsgemäß aus der Menge von n = $N_{max}$ Fingerprints sämtliche Kombinationen von Fingerprints mit einer Anzahl z gebildet werden, wobei z $\leq$ $N_{max}$ ist, innerhalb jeder Kombination für die darin bildbaren Paare von Fingerprints ein Match-Score-Wert m gebildet wird, alle Kombinationen, bei welchen der Match-Score-Wert aller Paare nicht zwischen einer vorgebbaren unteren und einer vorgebbaren oberen Grenze liegt, verworfen werden, für die verbleibenden Kombinationen eine Kostenfunktion

$$K = \sum_i W_i \cdot C_i$$

als Linearkombination gewichteter Qualitätsbeiträge berechnet wird, und jene Fingerprints, welche die Kostenfunktion minimieren als Satz zur Referenzdarstellung herangezogen werden.

Dank der Erfindung wird bereits bei der Überprüfung für die Archivierung eine spätere Identifikation simuliert, und das System bzw. das Verfahren reagiert auf diese Identifikation. Dabei ist es variabel gegenüber der Anzahl der verwendeten Fingerprints, und durch Wahl geeigneter Qualitätsbeiträge kann es unterschiedlichen Anforderungen an Sicherheit, Geschwindigkeit, etc. angepaßt werden.

Zweckmäßigerweise geht man bei dem Verfahren weiters so vor, daß die Anzahl z $\geq$ max (2, $N_{min}$ gewählt wird, wobei $N_{min}$ die Minimalanzahl betrachteter Fingerprints ist.

Im Sinne einer ständigen Verbesserung des Referenzsatzes empfiehlt es sich, wenn das Verfahren nach jeder erfolgreichen Identifikation wiederholt wird, wobei dazu neben dem Referenzsatz der Fingerprints der identifizierte Anfrage-Fingerprint herangezogen wird, wobei ein in dem bisherigen Referenzsatz enthaltener Fingerprint durch den Anfrage-Fingerprint ersetzt wird, falls hierdurch eine weitere Minimierung der Kostenfunktion erfolgt.

In der Praxis zeigt es sich als vorteilhaft, wenn als Qualitätsbeiträge der mittlere Match-Score-Wert für alle Paare der Kombination und/oder die Standardabweichungen des Match-Score-Wertes für die Paare der Kombination und/oder die Anzahl der Fingerprints in der Kombination verwendet werden.

Als sehr brauchbar hat es sich erwiesen, falls die von Printflächen der Fingerprints gemeinsam bedeckte Fläche ermittelt und die relative Größe dieser Fläche als Qualitätsbeitrag verwendet wird.

Weitere praxisbewährte Qualitätsbeiträge für die Kostenfunktion können sein: Die Mittelwerte der in allen Paaren der Kombination gepaarten Minutien, die Mittelwerte der in allen Paaren der Kombination nicht paarbaren Minutien oder ausgesuchte Anteile der zweidimensionalen Fouriertransformierten der Fingerprints.

Die Erfindung samt weiterer Vorteile ist im folgenden anhand beispielsweiser Ausführungen näher erläutert. Zur Erleichterung der Lesbarkeit wird zunächst eine Erläuterung bzw. Definition der nicht nur hier, sondern auf dem Fachgebiet allgemein verwendeten Ausdrücke gegeben.

Fingerprint
Das unbearbeitete Bild eines Fingerabdruckes in maschinell bearbeitbarer Form.
Identität
Ein Verweis auf eine bestimmte Person.
Identität eines Fingerprints
Die Verbindung eines Fingerprints mit einer Identität. Zusätzlich die Zusicherung, daß ein Fingerprint seinen Ursprung aus einem bestimmten Finger der Person hat.
Encodierter Fingerprint
Die Menge der aus einem Fingerprint extra-hierten und für die Wiedererkennung relevanten Merkmale (Minutientypen, -koordinaten, -orientierungen, ...).
Anfrage Fingerprint
Ein Fingerprint, dessen Identität festge-stellt bzw. geprüft werden soll.
Referenz
Die aus einer nichtleeren Menge von Fingerprints bekannter Identität gewonnene Information, die als Basis für den Vergleich mit Anfrage Fingerprints dient.
Archiv
Eine Menge von Referenzen verschiedener Identität.
Match Score
Eine Funktion, die aus zwei Fingerprints eine Zahl liefert, die monoton mit der Wahrscheinlichkeit korreliert, daß beiden Fingerprints die gleiche Fingerprint-Identität zukommt.
Matchfunktion
Eine Bool'sche Funktion, die für jedes Paar aus einem Fingerprint und einer Referenz eine Zusicherung liefert, ob dem Fingerprint die gleiche Identität zukommt, wie der Referenz oder nicht (der Weg zur Identität führt immer über die Identität des Fingerprints.).
Authentifikation
Ein Verfahren, die behauptete und in einem Archiv bekannte Identität eines Anfrage Fingerprints anhand einer Match-Funktion zu überprüfen.

Identifikation
Ein Verfahren, die Identität eines Anfrage Fingerprints aus den Referenzen eines Archivs mit Hilfe einer Match-Funktion zu ermitteln.
Enrollment
Ein Verfahren, nach dem aus einer Menge von Fingerprints bekannter Identität eine Referenz erzeugt wird.
Enrollment-Satz
Die Menge von Fingerprints, die vom Enrollment zur Bildung einer Referenz akzeptiert wurde.
Printfläche
Die von einer geschlossenen Linie begrenzte Fläche eines Fingerabdrucks, im einfachsten Fall ein Rechteck, welches sich z.B. aus der Geometrie eines Fingerprintsensors ergibt.

Matchfunktionen sind auf dem Fachgebiet bekannt, und sie sind als solche nicht Gegenstand der Erfindung. Beispiele für Match-Funktionen sind unter anderem in den folgenden Literaturstellen zu finden: „On-Line Fingerprint Verification", A. Jain, L. Hong, R. Bolle, IEEE Trans. on Pattern Analysis and Machine Intelligence, Vol. 19, No. 4, April 1997, pp. 302 - 314, „On-Line Fingerprint Verification", A. Jain. L. Hong, Proceedings if ICPR 1996 pp. 596, N. Ratha, K. Karu. S. Chen. A. Jain, IEEE Trans. on Pattern Analysis and Machine Intelligence, Vol. 18, No. 8, August 1996, pp. 799.

Die Erfindung samt weiteren Vorteilen ist im folgenden anhand beispielsweiser Ausführungsmöglichkeiten näher erläutert.

Für die Bildung eines Enrollments wird zunächst eine Anzahl von Fingerprints mit Hilfe bekannter Printsensoren auf genommen. Solche Printsensoren können beispielsweise auf optischer oder kapazitiver Basis arbeiten, wobei in diesen Fällen die Geometrie des Printsensors die Printfläche bestimmt, die rechteckig, oval, polygonal, etc. sein kann. Üblicherweise werden die aufgenommenen Fingerprints zunächst zwischengespeichert.

Wenngleich vorausgesetzt wird, daß die Identität der erfaßten Fingerprints konstant bleibt, muß die Möglichkeit in Betracht gezogen werden, daß eine Person verschiedene Finger auf den Sensor auflegt bzw. daß verschiedene Personen Finger auf legen. Solche Fälle müssen erkannt und verhindert werden, wozu ein entsprechendes Vorauswahlverfahren angewendet werden kann.

Nun ist anzumerken, daß die Erfindung das eigentliche Enrollment betrifft, sodaß die unmittelbare Übernahme der Fingerprints von einem Printsensor zwar der üblichen Vorgangsweise entspricht, die für das Enrollment verwendeten Fingerprints jedoch auch aus anderen Quellen, z.B. vorhandenen Aufnahmen oder bereits länger zuvor aufgenommenen und gespeicherten Fingerprints stammen können.

Jedenfalls wird für das Enrollment der erste Fingerabdruck akzeptiert, wobei dies insofern mit Einschränkungen zu verstehen ist, als natürlich gewisse Filterungen, Qualitätsschwellen, etc. vorgesehen sind, welche die Aufnahme qualitativ unbrauchbarer Fingerprints verhindern sollen.

Insgesamt geht man bei dem Verfahren von n Fingerprints aus, wobei die Anzahl n typischerweise 4 bis 6 beträgt. Aus der Menge der n Fingerprints werden nun sämtliche Kombinationen von Fingerprints mit einer Anzahl z gebildet, wobei für z gilt

$$\max (2, N_{min}) \leq Z \leq N_{max}.$$

An einem Beispiel seien die möglichen Kombinationen veranschaulicht: Es gebe die Fingerprints A, B. C und D. $N_{min}$ = 1, $N_{max}$ = 4, dann sind die folgenden Kombinationen möglich: (AB, AC, AD, BC, BD, ABC, ABD, BCD, ABCD).

Für jede mögliche Kombination wird für die in ihr bildbaren Paare ein sogenannter Match-Score-Wert M gebildet und alle Kombinationen, deren Match-Score Wert nicht zwischen einer vorgebbaren unteren und einer vorgebbaren oberen Grenze liegt, was anschreibbar ist, z.B. als:

$$EnrollMinScore \leq m \leq EnrollMaxScore$$

werden verworfen. Die Bedingung für *EnrollMinScore* ist in sich klar, und die Bedingung für *EnrollMaxScore* stellt sicher bzw. erlaubt, daß die erfaßten Fingerprints eine gewisse Mindestvariabilität besitzen.

Für die nach dieser Auswahl verbleibenden Kombinationen wird eine Kostenfunktion als eine Linearkombination gewichteter Beiträge berechnet

$$K = \sum_{i} W_i \cdot C_i$$

Dabei sind $W_i$ die Gewichte und $C_i$ die Beiträge, die hier auch Qualitätsbeiträge genannt werden.

Jene Fingerprints, welche die Kostenfunktion minimieren, werden als Satz zur Referenzdarstellung herangezogen. Es ist sinnvoll, wenn man das erläuterte Verfahren nach jeder erfolgreichen Identifikation wiederholt und dabei neben dem Referenzsatz der Fingerprints auch den identifizierten Anfrage-Fingerprint verwendet. Dieser kann dann einen bisher in dem Referenzsatz enthalten gewesenen Fingerprint ersetzen, falls dadurch die Kostenfunktion weiter minimiert wird.

Typische und zu gut verwertbaren Ergebnissen führende Qualitätsbeiträge sind nachstehend erläutert.

Der mittlere Match-Score-Wert für alle Paare der Kombinationen und/oder die Standardabweichungen des Match-Score-Wertes für die Paare der Kombinationen kann als Qualitätsbeitrag herangezogen werden.

Ein anderer Qualitätsbeitrag kann die Anzahl der Fingerprints in der Kombination sein, da beispielsweise, falls eine Kombination, die aus vier Fingerprints besteht, die gleichen Kosten liefert, wie eine aus zwei oder drei Fingerprints bestehende Kombination, der Kombination aus vier Fingerprints der Vorzug zu geben ist. Vier Fingerprints sind für einen noch unbekannten Anfrage-Fingerprints repräsentativer als zwei, welche vielleicht einander sehr gut entsprechenden, möglicherweise aber nicht einem Anfrage-Fingerprint.

Die relative Größe jener Fläche, die von Printflächen der Fingerprints gemeinsam bedeckt wird, ist gleichfalls ein brauchbarer Qualitätsbeitrag. Man ermittelt diese gemeinsame Fläche und bezieht sie dann auf die kleinere der beiden Flächen.

Weitere Qualitätsbeiträge können die Mittelwerte der in allen Paaren der Kombination gepaarten Minutien oder Mittelwerte der in allen Paaren der Kombination nicht paarbaren Minutien sein. Paarungen oder Entsprechungen von Minutien können naturgemäß nur dann gefunden werden, wenn sie bei zwei Fingerprints innerhalb der weiter oben erwähnten gemeinsamen Fläche liegen. Für alle anderen Minutien kann daher prinzipiell keine Entsprechung gefunden werden, sie sind nicht „matchbar".

Schließlich sei darauf verwiesen, daß als Qualitätsbeiträge auch ausgesuchte Anteile der zweidimensional Fouriertransformierten der Fingerprints verwendet werden können. Bezüglich der möglichen Fouriertransformation sei verwiesen auf beispielsweise „The Scientists and Engineering Guide to Digital Signal Processing", S.W. Smith, 1999, California Technical Publishing, ISBN 0-9960-176-7-6, Chapter 24, „Linear Image Processing". Uber die Auswahl der Anteile findet sich näherer in einer zeitranggleichen Patentanmeldung der Anmelderin.

**Patentansprüche**

1. Verfahren für das Enrollment von Fingerprints, bei welchem für die Erstellung einer Referenz aus einer Menge von $N_{max}$ Fingerprints unter Beachtung von Qualitätskriterien ein Satz von k Fingerprints ausgewählt und zur Referenzdarstellung für eine spätere Identifikation eines Anfrage-Fingerprints herangezogen wird,
   **dadurch gekennzeichnet**,

   daß aus der Menge von n = $N_{max}$ Fingerprints sämtliche Kombinationen von Fingerprints mit einer Anzahl z gebildet werden, wobei z ≤ $N_{max}$ ist,
   innerhalb jeder Kombination für die darin bildbaren Paare von Fingerprints ein Match-Score-Wert in gebildet wird, alle Kombinationen, bei welchen der Match-Score-Wert aller Paare nicht zwischen einer vorgebbaren unteren und einer vorgebbaren oberen Grenze liegt, verworfen werden, für die verbleibenden Kombinationen eine Kostenfunktion

$$K = \sum_i W_i \cdot C_i$$

als Linearkombination gewichteter Qualitätsbeiträge $C_i$ berechnet wird, und jene Fingerprints, welche die Kostenfunktion minimieren als Satz zur Referenzdarstellung herangezogen werden.

2. Verfahren nach Anspruch 1, **dadurch gekennzeichnet**, daß die Anzahl $z \geq$ max $(2, N_{min})$ gewählt wird, wobei $N_{min}$ die Minimalanzahl betrachteter Fingerprints ist.

3. Verfahren nach Anspruch 1 oder 2, **dadurch gekennzeichnet**, daß es nach jeder erfolgreichen Identifikation wiederholt wird, wobei dazu neben dem Referenzsatz der Fingerprints der identifizierte AnfrageFingerprint herangezogen wird, wobei ein in dem bisherigen Referenzsatz enthaltener Fingerprint durch den AnfrageFingerprint ersetzt wird, falls hierdurch eine weitere Minimierung der Kostenfunktion erfolgt.

4. Verfahren nach einem der Ansprüche 1 bis 3, **dadurch gekennzeichnet**, daß als Qualitätsbeiträge der mittlere Match-Score-Wert für alle Paare der Kombination verwendet werden.

5. Verfahren nach einem der Ansprüche 1 bis 4, **dadurch gekennzeichnet**, daß als Qualitätsbeiträge die Standardabweichungen des Match-Score-Wertes für die Paare der Kombination verwendet werden.

6. Verfahren nach einem der Ansprüche 1 bis 5, **dadurch gekennzeichnet**, daß als Qualitätsbeiträge die Anzahl der Fingerprints in der Kombination verwendet werden.

7. Verfahren nach einem der Ansprüche 1 bis 6, **dadurch gekennzeichnet**, daß die von Printflächen der Fingerprints gemeinsam bedeckte Fläche ermittelt und die relative Größe dieser Fläche als Qualitätsbeitrag verwendet wird.

8. Verfahren nach einem der Ansprüche 1 bis 7, **dadurch gekennzeichnet**, daß als Qualitätsbeiträge die Mittelwerte der in allen Paaren der Kombination gepaarten Minutien verwendet werden.

9. Verfahren nach einem der Ansprüche 1 bis 8, **dadurch gekennzeichnet**, daß als Qualitätsbeiträge die Mittelwerte der in allen Paaren der Kombination nicht paarbarer Minutien verwendet werden.

10. Verfahren nach einem der Ansprüche 1 bis 9, **dadurch gekennzeichnet**, daß als Qualitätsbeiträge ausgesuchte Anteile der zweidimensionalen Formiertransformierten der Fingerprints verwendet werden.